# EUROPÄISCHE PATENTSCHRIFT

(11) **EP 4 022 191 B1**
(45) Veröffentlichungstag und Bekanntmachung des Hinweises auf die Patenterteilung: **16.10.2024**
(21) Anmeldenummer: 20768521.5
(22) Anmeldetag: 28.08.2020
(51) Int. Cl.: F16B 45/02, B66C 1/36

(54) **UNTERWASSERHAKEN MIT BETÄTIGUNGSTASTER UND FREIGABETASTER**
UNDERWATER HOOK WITH ACTUATION BUTTON AND RELEASE BUTTON
CROCHET SOUS-MARIN AVEC BOUTON D'ACTIONNEMENT ET BOUTON DE LIBÉRATION

(30) Priorität: 30.08.2019 DE 102019213151
(43) Veröffentlichungstag der Anmeldung: 06.07.2022
(73) Patentinhaber: RUD Ketten Rieger & Dietz GmbH u. Co. KG, 73432 Aalen (DE)
(72) Erfinder: MÜHLBERGER, Lukas, 73441 Bopfingen (DE); BETZLER, Michael, 73453 Abtsgmünd (DE)
(74) Vertreter: Grünecker Patent- und Rechtsanwälte PartG mbB
(86) Internationale Anmeldenummer: PCT/EP2020/074144
(87) Internationale Veröffentlichungsnummer: WO 2021/038083

(56) Entgegenhaltungen:
- DE-A1- 102010 027 153
- DE-U1- 202011 103 255
- US-A- 1 626 865
- US-A1- 2011 175 385

## Beschreibung

Die Erfindung betrifft einen Unterwasserhaken mit einer Maulfalle, die in einem gesicherten Zustand des Unterwasserhakens in einer ein Hakenmaul verschließenden Position freigebbar gesichert ist, mit einem Betätigungstaster, der zum Öffnen der Maulfalle bewegungsübertragend mit der Maulfalle verbunden ist und sich im gesicherten Zustand des Unterwasserhakens in einer Schließstellung befindet, und mit einem Freigabetaster, der im gesicherten Zustand des Unterwasserhakens in einer Sperrstellung eine Bewegung des Betätigungstasters aus der Schließstellung blockiert, wobei sich der Freigabetaster im gesicherten Zustand des Unterwasserhakens insbesondere unmittelbar im Eingriff mit dem Betätigungstaster befindet, wobei der Unterwasserhaken einen Grundkörper aufweist, in dem der Betätigungstaster beweglich aufgenommen ist, und wobei eine auf den Betätigungstaster wirkende Schließfeder vorhanden ist, die sich zwischen dem Grundkörper und dem Betätigungstaster abstützt und den Betätigungstaster in Richtung des gesicherten Zustandes drückt.

Ein derartiger Unterwasserhaken ist aus der WO 02/25123 A1 bekannt. Nachteilig bei diesem Haken ist jedoch, dass der Freigabetaster nur schwer zu betätigen ist, wenn eine Last auf die Maulfalle in deren Öffnungsrichtung drückt. Aus der US 2011/175385 A1 ist ein selbstverschließenden Haken mit einer Maulfalle bekannt, bei dem die Maulfalle über einen Abzug betätigbar ist. Wenn der Abzug gedrückt wird, bewegt sich die Maulfalle von einer geschlossenen Position, in der sie das Hakenmaul des Hakens verschließt, in eine Freigabeposition. Der Haken weist weiterhin eine Abzugssicherung auf, die eine Bewegung des Hakens versperrt. Aus der DE 10 2010 027 153 A1 ist ein Karabinerhaken mit einem Betätigungselement, das zum Öffnen eines Schnappers dient, bekannt. Der Karabinerhaken mit einem zusätzlichen Sicherungshebel versehen. Aus der US 1 626 865 A ist ein Sicherheitshaken mit einem mit einer Maulfalle schließbaren Hakenmaul bekannt. Aus der DE 20 2011 103 255 U1 ist ein Karabinerhaken mit einer Karabineröffnung und einem die Karabineröffnung verschließendes Verschließteil bekannt.

Der Erfindung liegt folglich die Aufgabe zugrunde, einen einfacher und zuverlässiger zu betätigenden Unterwasserhaken zu schaffen.

Diese Aufgabe wird erfindungsgemäß dadurch gelöst, dass sich der Freigabetaster über eine Verriegelungsfeder am Betätigungstaster abstützt, wobei die Verriegelungsfeder eine geringere Federhärte aufweist als die Schließfeder.

Diese Ausgestaltung verhindert, dass eine auf die Maulfalle wirkende Last die Betätigung des Freigabetasters beeinträchtigt. Da die Verriegelungsfeder eine geringere Federhärte aufweist als die Schließfeder wird bei einem Zangengriff automatisch zunächst der Freigabetaster, insbesondere aus der Sperrstellung, bewegt, bevor sich der Betätigungstaster, insbesondere aus der Sicherungsstellung, bewegt.

Die Erfindung kann durch die weiteren jeweils für sich vorteilhaften und beliebig miteinander kombinierbaren Weiterbildungen verbessert werden.

So kann gemäß einer ersten vorteilhaften Ausgestaltung der Betätigungstaster eine von der Schließstellung beabstandete Offenstellung aufweisen. In der Schließstellung des Betätigungstasters ist das Hakenmaul durch die mit dem Betätigungstaster gekoppelte Maulfalle geschlossen, in der Offenstellung ist die Maulfalle geöffnet. Damit der Unterwasserhaken durch einen Greifer eines Unterwasserfahrzeugs betätigbar ist, ist es von Vorteil, wenn der Betätigungstaster in der Offenstellung gegenüber der Schließstellung eingedrückt ist. Aufgrund der bewegungsübertragenden Kopplung von Betätigungstaster und Maulfalle kann die Bewegung des Betätigungstasters von der Schließstellung in die Offenstellung in eine entsprechende Bewegung der Maulfalle von einer Position, in der sie das Hakenmaul verschließt, in eine Position, in der das Hakenmaul geöffnet ist, übertragen werden.

Die Schließstellung des Betätigungstasters, in der das Hakenmaul durch die Maulfalle geschlossen ist, kann eine Sicherungsstellung und eine hiervon beabstandete Freigabestellung aufweisen. Auch hier kann der Betätigungstaster in der Freigabestellung gegenüber der Sicherungsstellung eingedrückt sein. In der Sicherungsstellung ist die Maulfalle durch den Betätigungstaster gegen eine Bewegung in Öffnungsrichtung blockiert. Eine in Öffnungsrichtung auf die Maulfalle wirkende Öffnungskraft kann diese folglich nicht öffnen. In der Freigabestellung ist die Blockierung der Maulfalle durch den Betätigungstaster gelöst. Eine auf die Maulfalle wirkende Öffnungskraft kann eine auf den Betätigungstaster in Richtung von der Freigabestellung in die Offenstellung wirkende Kraft erzeugen und diesen in Richtung der Offenstellung bewegen. Die Sicherungsstellung zwischen der Sperrstellung und der Freigabestellung erhöht die Sicherheit, weil der Betätigungstaster zunächst einen bestimmten Bewegungshub ausführen muss, bevor die Maulfalle freigegeben wird. Im gesicherten Zustand des Unterwasserhakens befindet sich der Betätigungstaster bevorzugt in der Sicherungsstellung.

Eine weitere vorteilhafte Ausgestaltung sieht vor, dass der Freigabetaster eine Sperrstellung und davon beabstandete Betätigungsstellung aufweist. In der Betätigungsstellung ist der Freigabetaster gegenüber der Sperrstellung eingedrückt. In der Sperrstellung des Freigabetasters ist die Bewegung des Betätigungstasters in die Offenstellung bzw. aus der Schließstellung und/oder der Sicherungsstellung, durch den Freigabetaster blockiert. Der Freigabetaster befindet sich im gesicherten Zustand des Unterwasserhakens bevorzugt in der Sperrstallung. Bevorzugt kann der Unterwasserhaken nur dann den gesicherten Zustand einnehmen, wenn sich der Freigabetaster in der Sperrstellung befindet. Die Sperrstellung kann somit als sichtbarer Indikator dienen, dass der Unterwasserhaken gesichert ist.

In der Betätigungsstellung des Freigabetasters ist die Bewegung des Betätigungstasters in die Offenstellung, bzw. aus der Schließstellung und/oder der Sicherungsstellung, vom Freigabetaster freigegeben. Eine Betätigung des Betätigungstasters ist bei dieser Ausgestaltung also erst möglich, wenn sich der Freigabetaster in der Betätigungsstellung befindet. In der Sperrstellung blockiert der Freigabetaster den Betätigungstaster. Der Betätigungstaster wiederum blockiert die Maulfalle. Eine direkte Wechselwirkung zwischen Freigabetaster und Betätigungstaster ist bevorzugt nicht vorhanden.

Die Bewegung des Betätigungstasters von der Schließstellung in die Offenstellung ist bevorzugt in Richtung des Freigabetasters gerichtet. Die Bewegung des Freigabetasters von der Sperrstellung in die Betätigungsstellung ist bevorzugt in Richtung des Betätigungstasters gerichtet. Auf diese Weise können durch einen Zangengriff, wie er beispielsweise von einem Greifer ausgeübt wird, Freigabetaster und Betätigungstaster betätigt werden. Hierzu können sich insbesondere der Freigabetaster und der Betätigungstaster gegenüberliegen.

Bevorzugt ist die Sicherungsstellung die Ruhestellung des Betätigungstasters. Die Sperrstellung ist bevorzugt die Ruhestellung des Freigabetasters. Die jeweilige Ruhestellung wird insbesondere selbsttätig eingenommen, wenn keine Kraft von außen auf den Unterwasserhaken wirkt. Damit ist sichergestellt, dass sich in Ruhe der Unterwasserhaken im gesicherten Zustand befindet.

Insbesondere kann der Betätigungstaster in Richtung der Sicherungsstellung vorgespannt sein. Der Freigabetaster kann in Richtung der Sperrstellung vorgespannt sein.

Der Unterwasserhaken weist einen Grundkörper auf, an dem der Betätigungstaster und bevorzugt auch der Freigabetaster beweglich gehalten sind. Der Grundkörper bildet bevorzugt monolithisch einen Hakenabschnitt aus, der um das Hakenmaul gebogen ist. Ferner kann der Grundkörper einen Anschlagabschnitt ausbilden, an dem ein Anschlagmittel befestigt werden kann, um den Unterwasserhaken beispielsweise an einem Hebemittel anzubringen. Der Betätigungstaster und der Freigabetaster können in einem von zwei Backen des Grundkörpers gebildeten Aufnahmeschacht angeordnet sein.

Der Betätigungstaster und der Freigabetaster können rotatorisch, beispielsweise schwenkbar, translatorisch, beispielsweise verschieblich, oder translatorisch-rotatorisch, beispielsweise über eine Kulissenführung am Grundkörper beweglich gehalten sein. Bevorzugt sind der Betätigungstaster und der Freigabetaster schwenkbar am Grundkörper gehalten. Die Schwenkachsen von Betätigungstaster und Freigabetaster befinden sich dabei bevorzugt entweder beide an einer dem Hakenabschnitt abgewandten Seite des Grundkörpers oder einer dem Anschlagabschnitt zugewandten Seite des Grundkörpers im Bereich zwischen dem Anschlagabschnitt und dem Hakenabschnitt.

Die Bewegungsübertragung zwischen Betätigungstaster und Maulfalle kann über ein Getriebe erfolgen, das Betätigungstaster und Maulfalle miteinander verbindet. Insbesondere können Betätigungstaster und Maulfalle miteinander verzahnt sein. Betätigungstaster und Maulfalle können beispielsweise als Zahnhebel ausgestaltet sein.

Damit Betätigungstaster und Freigabetaster ihre jeweilige Ruhestellung selbsttätig einnehmen, kann der Unterwasserhaken ein Federsystem aufweisen. Das Federsystem weist eine Schließfeder auf, die auf den Betätigungstaster insbesondere in Richtung dessen Sicherungsstellung wirkt. Die Schließfeder stützt sich unmittelbar zwischen dem Grundkörper und dem Betätigungstaster ab.

Die Maulfalle muss nicht unbedingt mit einer eigenen Feder versehen sein, da sie über die bewegungsübertragende Verbindung mit dem Betätigungstaster durch die Schließfeder in eine das Hakenmaul verschließende Position mitbewegt wird, sobald sich der Betätigungstaster in die Schließstellung bewegt.

Die Schließfeder kann insbesondere eine um die Schwenkachse des Betätigungstasters gelegte Schenkelfeder sein, deren einer Schenkel am Grundkörper und deren anderer Schenkel sich am Betätigungstaster abstützt.

Das Federsystem weist zusätzlich zur Schließfeder die Verriegelungsfeder auf. Die Verriegelungsfeder kann auf den Freigabetaster wirken und/oder den Freigabetaster in Richtung der Sperrstellung drücken.

Bevorzugt sind die Schließfeder und die Verriegelungsfeder in Reihe geschaltet, um eine genau bestimmte Bewegungsabfolge zwischen dem Freigabetaster und dem Betätigungstaster festzulegen, wenn beide gleichzeitig, beispielsweise durch einen Zangengriff eines Greifers, betätigt werden.

Bevorzugt ist die Verriegelungsfeder unmittelbar zwischen dem Freigabetaster und dem Betätigungstaster, insbesondere in deren Bewegungsrichtung gesehen zwischen Freigabetaster und Betätigungstaster, angeordnet. Der Freigabetaster stützt sich über die Verriegelungsfeder am Betätigungstaster ab. Die Verriegelungsfeder kann insbesondere den Freigabetaster und den Betätigungstaster voneinander weg drücken.

Damit bei einem Zangengriff automatisch zunächst der Freigabetaster, insbesondere aus der Sperrstellung, bewegt wird, bevor sich der Betätigungstaster, insbesondere aus der Sicherungsstellung, bewegt, ist vorgesehen, dass die Verriegelungsfeder eine geringere Federhärte aufweist als die Schließfeder.

Im gesicherten Zustand des Unterwasserhakens kann der Freigabetaster den Betätigungstaster über ein Tastergesperre in der Schließstellung, insbesondere in der Sicherungsstellung, verriegeln. Das Tastergesperre befindet sich bevorzugt zwischen dem Freigabetaster und dem Betätigungstaster, insbesondere in einem Bereich zwischen den beiden jeweiligen Enden von Freigabetaster und Betätigungstaster, zwischen einer Schwenkachse und einem freien Ende bzw. den freien Enden der beiden Taster. Ferner kann sich das Tastergesperre zwischen einer Schwenkachse der Maulfalle und der Schwenkachse von Betätigungstaster und/oder Freigabetaster befinden. Diese Ausgestaltung sorgt dafür, dass der Bereich um das Hakenmaul und der Bereich um den Anschlagabschnitt konstruktiv einfach und kompakt gehalten werden kann.

Das Tastergesperre ist bevorzugt ein einseitiges Gesperre bzw. ein Richtgesperre, da es bevorzugt nur durch eine Bewegung des Freigabetasters, nicht aber durch eine Bewegung des Betätigungstasters gelöst werden kann. Das Tastergesperre ist in der Sicherungsstellung des Betätigungstasters und der Sperrstellung des Freigabetasters verriegelt. Befindet sich der Freigabetaster in der Betätigungsstellung, ist das Tastergesperre gelöst.

Das Tastergesperre kann zwei Formschlusselemente aufweisen, die im gesicherten Zustand des Unterwasserhakens bzw. wenn sich der Betätigungstaster in der Sicherungsstellung und der Freigabetaster in der Sperrstellung befinden, miteinander verrastet sind. Um eine kompakte Bauweise zu erzielen, kann ein Formschlusselement am Betätigungstaster in eine Tasche des Freigabetasters ragen oder ein Formschlusselement am Freigabetaster in eine Tasche des Betätigungstasters ragen. Ferner kann ein Formschlusselement des Tastergesperres von einem Vorsprung von Betätigungstaster und/oder Freigabetaster gebildet sein.

Bevorzugt ist das Tastergesperre so ausgestaltet, dass eine im gesicherten Zustand des Unterwasserhakens auf den Betätigungstaster wirkende Kraft über das Tastergesperre eine auf den Freigabetaster wirkende Kraft erzeugt, deren Richtung durch die Schwenkachse des Freigabetasters verläuft. Dadurch bleibt der Freigabetaster momentenfrei und unabhängig davon stets einfach zu betätigen, wie groß eine auf den Betätigungstaster wirkende Kraft ist.

Alternativ kann die über das Tastergesperre vom Betätigungstaster zum Freigabetaster geleitete Kraft auch an der Schwenkachse des Freigabetasters vorbei gerichtet sein und ein den Freigabetaster in Richtung der Sperrstellung wirkendes Drehmoment erzeugen. Dadurch wird der gesicherte Zustand stabilisiert, wenn eine Kraft auf den Betätigungstaster in Richtung dessen Offenstellung wirkt.

Eine auf den Freigabetaster in Richtung der Betätigungsstellung wirkende Kraft bewegt diesen in die Betätigungsstellung. Die Bewegung des Freigabetasters überträgt sich nicht auf die Maulfalle, so dass dieses geschlossen und blockiert bleibt, solange sich der Betätigungstaster noch in der Sicherungsstellung befindet. Durch eine auf das Hakenmaul wirkenden Kraft kann sich das Hakenmaul erst öffnen, wenn der Betätigungstaster in die Freigabestellung bewegt ist.

Damit der Freigabetaster von der Sperrstellung in die Betätigungsstellung bewegt wird, muss zunächst die Kraft des Federsystems, insbesondere die Kraft der Verriegelungsfeder überwunden werden. Zusätzlich kann ein insbesondere einseitiges Gehemme bzw. Grenzwertgesperre eine zusätzliche Kraft erforderlich machen, um den Freigabetaster aus der Sperrstellung zu bewegen. Das Gehemme kann bevorzugt nur durch eine Kraft auf den Freigabetaster überwunden werden. Es kann als Richtformgehemme ausgestaltet sein und beispielsweise durch eine Verrastung der Formschlusselemente des Tastergesperres gebildet sein. In der Betätigungsstellung ist die Verrastung der Formschlusselemente des Tastergesperres dann gelöst. Die Verwendung eines Gehemmes erlaubt es, eine reproduzierbare Kraft zur Bewegung des Freigabetasters erforderlich zu machen.

Bei einer auf den Betätigungstaster wirkenden Kraft kann das Tastergesperre folglich als einseitiges Gesperre, bei einer auf den Freigabetaster wirkenden Kraft als einseitiges Gehemme ausgebildet sein. Die Wirkrichtungen Von Gesperre und Gehemme sind bei dieser Ausgestaltung einander entgegengesetzt.

Das eine Formschlusselement des Tastergesperres kann beispielsweise stiftförmig, beispielsweise ein Einschlagstift, das andere Formschlusselement eine Ausnehmung an einem Vorsprung sein, in der der Einschlagstift im gesicherten Zustand des Unterwasserhakens aufgenommen ist.

Der Betätigungstaster kann sich mit der Maulfalle über ein Maulgesperre im Eingriff befinden und die Maulfalle in der das Hakenmaul verschließenden Position blockieren, insbesondere wenn sich der Betätigungstaster in der Schließstellung befindet. Das Maulgesperre kann beabstandet vom Getriebe angeordnet sein. Das Maulgesperre ist bevorzugt ein einseitig wirkendes Richtgesperre, das nur durch eine Bewegung des Betätigungstasters aus der Schließstellung gelöst werden kann. Durch eine Bewegung der Maulfalle kann das Maulgesperre bevorzugt nicht gelöst werden.

Der Betätigungstaster und die Maulfalle können als zwei ineinandergreifende Sperrklinken ausgestaltet sein, insbesondere zusätzlich zu deren Ausgestaltung als Zahnhebel. In der Schließstellung des Betätigungstasters stützen sich der Betätigungstaster und die Maulfalle am Maulgesperre aneinander ab, wenn auf die Maulfalle eine Kraft in deren Öffnungsrichtung wirkt.

Das Maulgesperre ist bevorzugt so ausgestaltet, dass eine auf die geschlossene und verriegelte Maulfalle in deren Öffnungsrichtung wirkende Kraft über das Maulgesperre auf den Betätigungstaster übertragen wird und am Betätigungstaster durch dessen Schwenkachse gerichtet ist. Der Betätigungstaster bleibt somit auch bei hohen auf die Maulfalle wirkenden Kräften momentenfrei. Die zum Betätigen des Betätigungstasters notwendige Kraft bleit somit weitgehend unbeeinflusst von der auf die Maulfalle wirkenden Kraft. Zudem bleibt auf diese Weise ebenfalls der Freigabetaster momentenfrei, so dass die zu dessen Betätigung notwendige Kraft unabhängig von der Belastung der Maulfalle bleibt.

Gemäß einer weiteren vorteilhaften Ausgestaltung weist die bewegungsübertragende Verbindung von Betätigungstaster und Maulfalle ein Spiel auf, das wenigstens dem Hub des Betätigungstasters von der Sicherungsstellung in die Freigabestellung entspricht. Über diesen Hub besteht ein Leerlauf in der Bewegungsübertragung, so dass eine Bewegung des Betätigungstasters zunächst nicht zu einer Bewegung der Maulfalle führt. Der Leerlauf dient dazu, das Maulgesperre durch eine Bewegung des Betätigungstasters lösen zu können, ohne dass diese Bewegung zu einer Bewegung der Maulfalle führt.

Die Maulfalle kann in Richtung derjenigen Position, in der sie das Hakenmaul verschließt, vorgespannt sein, beispielsweise durch eine Maulfeder. Die Maulfeder, beispielsweise eine um eine Schwenkachse der Maulfalle gelegte Schenkelfeder, die sich an Maulfalle und Grundkörper abstützt, kann das zwischen der Maulfalle und dem Betätigungstaster angeordnete Getriebe vorspannen, so dass trotz eines Spiels im Getriebe die bewegungsübertragenden Elemente, wie eine Verzahnung, stets aneinander liegen.

Gemäß einer weiteren vorteilhaften Ausgestaltung kann der Grundkörper wenigstens eine Öffnung aufweisen, die sich von außerhalb des Grundkörpers zum Freigabetaster hin erstreckt. Diese wenigstens eine Öffnung kann als Spülöffnung dienen, um den Bereich zwischen Freigabetaster und Grundkörper freizuspülen. Sie kann gleichzeitig dazu genutzt werden, den Freigabetaster in einer weiteren Ausgestaltung durch ein Befestigungsmittel, beispielsweise einen Einschlagstift, einen Niet oder eine Schraube in der Betätigungsstellung festzulegen. In dieser Ausgestaltung ist der Freigabetaster wirkungslos und der geöffnete Zustand des Unterwasserhaken wird allein durch Betätigung des Betätigungstasters erreicht. Die Öffnung kann sich insbesondere quer zur Bewegungsrichtung des Freigabetasters erstrecken. Die Öffnung kann durch den gesamten Grundkörper und den Freigabetaster hindurchreichen, wenn sich Freigabetaster in der Betätigungsstellung befindet.

Der Betätigungstaster kann eine Befestigungsstelle zur Anbringung eines Zugmittels, beispielsweise eines Lanyards aufweisen. Die Befestigungsstelle kann eine einfache oder abgestufte Bohrung sein. An der Betätigungsstellung kann das Zugmittel angebracht sein. Die Verwendung eines Zugmittels ist insbesondere dann vorteilhaft, wenn der Freigabetaster in der Betätigungsstellung festgelegt wird, so dass der Unterwasserhaken alleine durch Zug am Zugmittel in den geöffneten Zustand überführt werden kann.

Die Betätigungsstellung befindet sich hierzu bevorzugt an einem von der Schwenkachse des Betätigungstasters abgewandten Ende des Betätigungstasters. Das Zugmittel kann sich vom Unterwasserhaken weg auf der Seite des Freigabetasters erstrecken.

Der Unterwasserhaken kann für verschiedene Tragkräfte ausgelegt sein, beispielsweise 5 t, 10 t, 25 t oder größere, kleinere und dazwischenliegende Werte. Von besonderem Vorteil ist es, wenn in einem Satz, der wenigstens zwei Unterwasserhaken unterschiedlicher Tragkraft aufweist, die Grundkörper der Unterwasserhaken unterschiedlicher Tragkraft in dem Bereich, in der der Grundkörper den Betätigungstaster und den Freigabetaster überdeckt, die gleiche, insbesondere zumindest abschnittsweise kreisförmige Außenkontur aufweist. Die Länge dieses Bereichs kann bei den Unterwasserhaken unterschiedlicher Tragkraft gleich sein. Dies ermöglicht es, die Unterwasserhaken trotz unterschiedlicher Tragkraft stets auf die gleiche Art und Weise handzuhaben, was insbesondere im Unterwassereinsatz mit ferngesteuertem Greifer die Handhabung erheblich erleichtert.

Wenigstens ein Unterwasserhaken des Satzes kann einen Grundkörper aufweisen, der im Bereich, in dem er den Freigabetaster und den Betätigungstaster überdeckt, wenigstens eine sich in Längsrichtung des Unterwasserhaken erstreckende Längsrippe aufweisen. Die Längsrippen von Unterwasserhaken unterschiedlicher Tragkraft können unterschiedlich groß sein, um den jeweils notwendigen Spannungsquerschnitt bereitzustellen. Auch kann ein Unterwasserhaken einen vollen Querschnitt ohne Längsrippen aufweisen.

Die Längsrichtung ist die Richtung, in der der Unterwasserhaken bestimmungsgemäß belastet werden soll, also die Richtung vom Anschlagabschnitt zum Hakenabschnitt.

Im Folgenden ist die Erfindung anhand zweier Ausführungsformen beispielhaft beschrieben. Nach Maßgabe der obigen Ausführungen kann auf ein Merkmal verzichtet werden, wenn es bei einer bestimmten Anwendung auf den mit diesem Merkmal verknüpften Vorteil oder technischen Effekt nicht ankommen sollte. Umgekehrt kann auch nach Maßgabe der obigen Ausführungen ein Merkmal hinzugefügt werden, wenn der Vorteil oder technische Effekt diese Merkmal bei einer bestimmten Anwendung von Vorteil ist.

In den Figuren sind für Elemente, die einander hinsichtlich Aufbau und/oder Funktion entsprechen, dieselben Bezugszeichen verwendet.

Es zeigen:
- Fig. 1: eine schematische Perspektivdarstellung eines geschlossenen Unterwasserhakens;
- Fig. 2: eine schematische Perspektivdarstellung eines offenen Unterwasserhakens;
- Fig. 3: eine schematische Draufsicht auf einen geschlossenen Unterwasserhaken;
- Fig. 4: eine schematische Schnittdarstellung des Unterwasserhakens der Fig. 1 in einem gesicherten Zustand;
- Fig. 5: eine schematische Schnittdarstellung des Unterwasserhakens der Fig. 3 in einem entsperrten Zustand;
- Fig. 6: eine schematische Schnittdarstellung des Unterwasserhakens der Fig. 3 in einem entriegelten Zustand;
- Fig. 7: eine schematische Schnittdarstellung des Unterwasserhakens der Fig. 3 im geöffneten Zustand;
- Fig. 8: eine Perspektivdarstellung eines weiteren Unterwasserhakens;
- Fig. 9: eine schematische Schnittdarstellung des Unterwasserhakens der Fig. 7 im gesicherten Zustand;
- Fig. 10: eine schematische Schnittdarstellung des Unterwasserhakens der Fig. 8 im entriegelten Zustand;
- Fig. 11: eine schematische Schnittdarstellung des Unterwasserhakens der Fig. 8 im geöffneten Zustand.

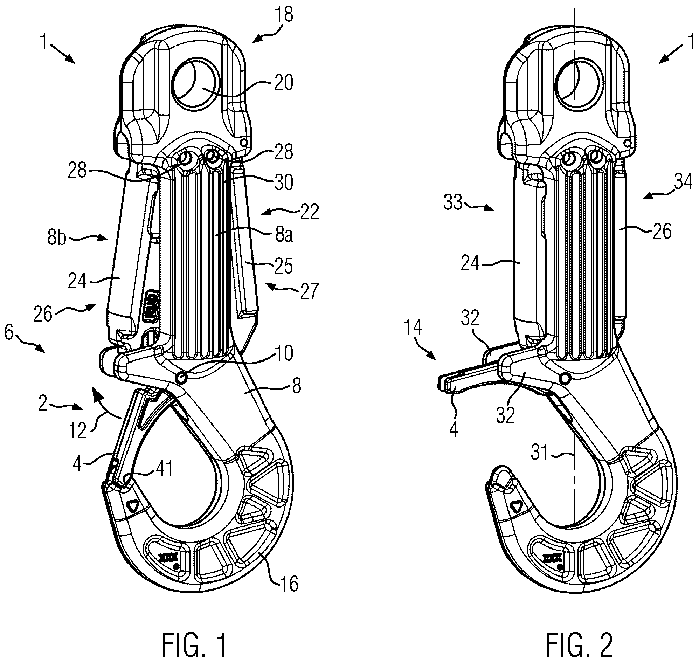

Zunächst wird der Aufbau eines Unterwasserhakens 1 allgemein mit Bezug auf die Fig. 1 bis 3 erläutert.

Der Unterwasserhaken 1 weist ein Hakenmaul 2 auf, in das eine Last (nicht gezeigt) mittels eines Anschlagmittels, wie einer Kette oder einem Seil eingehängt werden kann. Das Hakenmaul 2 ist mit einer schwenkbaren Maulfalle 4 versehen, die in einem gesicherten Zustand 6 des Unterwasserhakens 1 das Hakenmaul 2 verschließt und in dieser Position gesichert ist. Der gesicherte Zustand 6 ist in Fig.1 dargestellt.

Die Maulfalle 4 ist an einem Grundkörper 8 um eine Fallenachse 10, die beispielsweise von einem Einschlagstift gebildet sein kann, schwenkbar gelagert. In einem geöffneten Zustand 14 des Unterwasserhakens 1 ist die Maulfalle 4 geöffnet, wie Fig. 2 zeigt. Die Öffnungsrichtung 12 kann dabei von einem um das Hakenmaul 2 gekrümmten Hakenabschnitt 16 des Grundkörpers weg gerichtet sein.

Zum Anschlagen des Unterwasserhakens 1 an beispielsweise einer Hebevorrichtung ist ein Anschlagelement 18, beispielsweise eine Öse 20 vorgesehen.

Zwischen dem Hakenabschnitt 16 und dem Anschlagelement 20 befindet sich ein Betätigungsabschnitt 22 mit einem gegenüber dem Grundkörper 8 beweglichen Betätigungstaster 24 und einem gegenüber dem Grundkörper 8 beweglichen Freigabetaster 25. Der Betätigungstaster 24 öffnet die Maulfalle 4. Der Freigabetaster 25 verriegelt den Betätigungstaster 24 im gesicherten Zustand 6.

Im gesicherten Zustand 6 des Unterwasserhakens 1 befindet sich der Betätigungstaster 24 in einer Schließstellung 26. Der Freigabetaster 25 befindet sich in einer Sperrstellung 27.

Der Betätigungstaster 24 und der Freigabetaster 25 können schwenkbar am Grundkörper 8, beispielsweise über Schwenkachsen 28 bildenden Einschlagstifte gehalten sein. Die Schwenkachse 28 des Betätigungstasters 24 befindet sich dabei bevorzugt an der Seite des Anschlagelements 18 bzw. an dem vom Hakenabschnitt 16 abgewandten Ende des Betätigungstasters 24 bzw. Betätigungsabschnitts 22. Die Schwenkachse 28 des Freigabetasters 25 befindet sich bevorzugt ebenfalls an dem vom Hakenabschnitt 16 abgewandten Ende des Freigabetasters 25.

Alternativ oder zusätzlich zu einer schwenkbaren Anordnung können der Betätigungstaster 24 und der Freigabetaster 25 auch verschieblich im Grundkörper 8 gehalten sein.

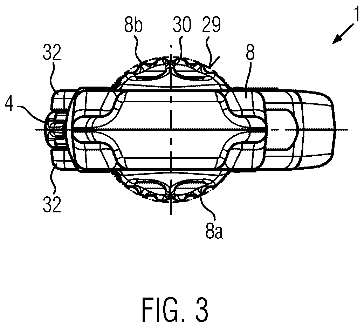

Im Bereich des Betätigungsabschnitts 22 ist der Grundkörper 8 geteilt, so dass er zwei backenförmige Gehäusehälften 8a, 8b bildet. Die Gehäusehälften 8a, 8b sind bevorzugt spiegelbildlich identisch ausgestaltet. Der Betätigungstaster 24 und der Freigabetaster 25 erstrecken sich zumindest teilweise zwischen die beiden Gehäusehälften 8a, 8b. Der Querschnitt der beiden Gehäusehälften 8a, 8b quer zur Richtung vom Anschlagelement 18 zum Hakenabschnitt 16 weist eine zumindest abschnittsweise kreisförmige Außenkontur bzw. Einhüllende 29 auf, wie sie insbesondere in Fig. 3 zu erkennen ist.

Unterschiedlich große Unterwasserhaken bzw. Unterwasserhaken unterschiedlicher Tragkraft weisen Betätigungsabschnitte 22 mit bevorzugt identischer Außenkontur 29 auf, um über unterschiedliche Unterwasserhaken hinweg dieselben Handhabungseigenschaften zu gewährleisten. Bei Unterwasserhaken geringerer Tragkraft können die Gehäusehälften 8a, 8b Längsrippen 30 aufweisen, die sich entlang einer Längsrichtung 31 des Unterwasserhakens 1 zwischen Anschlagelement 18 und Hakenabschnitt 16 erstrecken. Bei Unterwasserhaken größerer Tragkraft können die Gehäusehälften 8a, 8b aus Vollmaterial bestehen, um einen größeren Spannungsquerschnitt bereitzustellen. Alternativ können auch hier Längsrippen vorgesehen sein.

Die beiden Gehäusehälften 8a, 8b können ein Paar von beispielsweise vorspringenden Schutzbacken 32 bilden, zwischen die die Maulfalle 4 im geöffneten Zustand 14 geschwenkt ist. Im gesicherten Zustand 6 kann sich einer der Taster 24, 25, beispielsweise der Betätigungstaster 24 zwischen den Schutzbacken 32 befinden.

Im geöffneten Zustand 14 des Unterwasserhakens 1 befindet sich der Betätigungstaster 24 in einer Offenstellung 33 und der Freigabetaster 25 in einer Betätigungsstellung 34. In der Offenstellung 33 ist der Betätigungstaster 24 auf den Freigabetaster 25 zu bewegt bzw. in den Grundkörper 8 eingedrückt. In der Betätigungsstellung 34 ist der Freigabetaster 25 auf den Betätigungstaster 24 zu bewegt bzw. in den Grundkörper 8 eingedrückt.

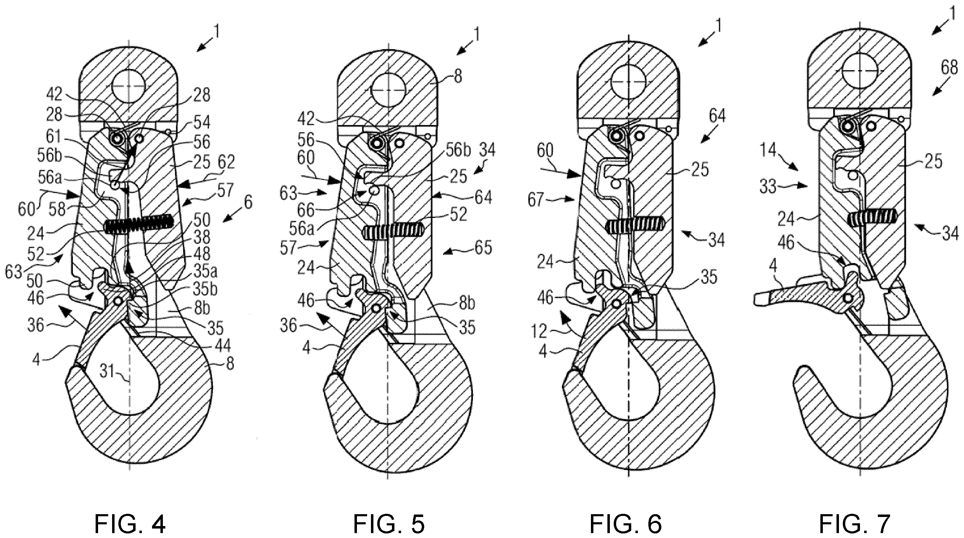

Fig. 4 zeigt den gesicherten Zustand 6 des Unterwasserhakens 1 zum besseren Verständnis von Funktion und Aufbau der Taster 24, 25 in einer Schnittdarstellung.

Im gesicherten Zustand 6 verriegelt der Betätigungstaster 24 die Maulfalle 4 in einer das Hakenmaul 2 verschließenden Stellung, so dass die Maulfalle 4 nicht durch eine in den Unterwasserhaken 1 eingehängte Last (nicht dargestellt) versehentlich geöffnet werden kann.

Der Betätigungstaster 24, der bewegungsübertragend mit der Maulfalle 4 verbunden ist, ist im gesicherten Zustand 6 bzw. in der Schließstellung 26 durch den sich in der Sperrstellung 27 befindlichen Freigabetaster 25 blockiert. Im gesicherten Zustand 6 kann der Betätigungstaster 24 somit nicht eingedrückt werden. Erst wenn der Freigabetaster 25 eingedrückt bzw. aus der Sperrstellung 27 bewegt wird oder sich in der Betätigungsstellung 34 befindet, kann der Betätigungstaster 24 eingedrückt bzw. aus der Schließstellung 26 in die Offenstellung 33 bewegt werden und dabei die mit ihm bewegungsübertragend gekoppelte Maulfalle 4 öffnen. Im kraftfreien Zustand nehmen der Betätigungstaster 24 und der Freigabetaster 25 den gesicherten Zustand 6 ein.

Nur wenn sich der Freigabetaster 25 in der Sperrstellung 27 befindet, kann der Unterwasserhaken den gesicherten Zustand 6 einnehmen. Der Freigabetaster 25 ist somit ein visueller Indikator für den gesicherten Zustand. In einem Bereich, der nur sichtbar ist, wenn sich der Freigabetaster in der Sperrstellung 27 befindet, kann der Freigabetaster 25 mit einer insbesondere unter Wasser optisch schnell erkennbaren Markierung, beispielsweise einer Farbe, versehen sein, um den gesicherten Zustand 6 des Unterwasserhakens zu kennzeichnen.

Die Maulfalle 4 und der Betätigungstaster 24 befinden sich über ein Maulgesperre 35 unmittelbar miteinander im Eingriff. Das Maulgesperre 35 blockiert eine Öffnungsbewegung der Maulfalle 4 bei einer auf die Maulfalle 4 in Öffnungsrichtung 12 wirkenden Öffnungskraft 36. Das Maulgesperre 35 wirkt einseitig, indem es die Bewegung des Betätigungstasters 25 in Richtung der Offenstellung 33 nicht blockiert. Das Maulgesperre 35 kann zwei Formschlusselemente 35a, 35b, beispielsweise einen maulfallenseitigen Vorsprung und einen betätigungstasterseitigen Vorsprung, die unter Wirkung der Öffnungskraft 36 gegeneinandergedrückt werden, aufweisen.

Durch das Maulgesperre 35 wird die Öffnungskraft 36 auf den Betätigungstaster 24 übertragen. Das Maulgesperre 35 bzw. die Formschlusselemente 35a, 35b sind so ausgestaltet, dass die dort wirkende, von der Öffnungskraft 36 erzeugte Haltekraft 38 durch die Schwenkachse 28 des Betätigungstasters 24 gerichtet ist. Dadurch bleiben Betätigungstaster 24 und Freigabetaster 25 momentenfrei und durch eine von der Größe der Öffnungskraft unabhängige Kraft bedienbar. Die Öffnungskraft kann die Maulfalle 4 nicht öffnen. Ein Fallenanschlag 41 am Hakenabschnitt 16 (Fig. 1), an dem die Maulfalle 4 im geschlossenen Zustand 6 anliegt, verhindert, dass die Maulfalle 4 durch eine von außen wirkende, entgegen der Öffnungskraft 36 gerichtete Kraft geöffnet werden kann.

Im kraftfreien Zustand wird der Betätigungstaster24 durch eine Schließfeder42 vom Grundkörper 8 bzw. den Gehäusehälften 8a, 8b weg in den gesicherten Zustand 6 bzw. von der Offenstellung 33 in die Schließstellung 26 gedrückt. Die Schließfeder 42 stützt sich bevorzugt unmittelbar zwischen dem Betätigungstaster 24 und dem Grundkörper 8 ab. Sie kann beispielsweise als eine Schenkelfeder ausgestaltet sein, die um die Schwenkachse 28 des Betätigungstasters 24 herum angeordnet ist, wobei sich ein Schenkel am Grundkörper 8 und ein anderer Schenkel am Betätigungstaster 24 abstützt.

Eine optionale Maulfeder 44, beispielsweise eine Schenkelfeder, wirkt auf die Maulfalle 4 in Richtung deren das Hakenmaul 2 verschließender Position. Die Maulfalle 44 kann Teil des Federsystems sein und sich zwischen Grundkörper 8 und Maulfalle 4 abstützen.

Der Betätigungstaster 24 ist beispielsweise über ein Getriebe 46 bewegungsübertragend mit der Maulfalle 4 gekoppelt. So können der Betätigungstaster 24 und die Maulfalle 4 miteinander verzahnt sein. Beispielsweise kann eine Verzahnung 48 der Maulfalle 4 zwischen eine Verzahnung 50 des Betätigungstasters 24 greifen. Die Maulfalle 4 und der Betätigungshebel 24 bilden dabei zwei sich gegenüberliegende Zahnhebel.

Auf den Freigabetaster 25 wirkt eine Verriegelungsfeder 52, die diesen weg vom Gehäuse 8 bzw. in Richtung der Sperrstellung 27 drückt. Im kraftfreien Zustand strebt der Freigabetaster 25 ebenso wie der Betätigungstaster 24 somit den gesicherten Zustand 6 des Unterwasserhakens 1 an. Die Verriegelungsfeder 52 kann sich unmittelbar zwischen dem Betätigungstaster 24 und dem Freigabetaster 25 abstützen. Die Verriegelungsfeder 52 drückt den Betätigungstaster 24 und den Freigabetaster 25 voneinander weg.

Im kraftfreien Zustand liegt der Freigabetaster 25 an einem Freigabetasteranschlag 54 an. Der Freigabetasteranschlag 54 begrenzt die Bewegung des Freigabetasters 25 weg vom Grundkörper 8. Die Verriegelungsfeder 52 bildet zusammen mit der Schließfeder 42 ein Federsystem, das sicherstellt, dass der Betätigungstaster 24 und der Freigabetaster 25 in Ruhe den gesicherten Zustand 6 bzw. ihre jeweilige Schließstellung 57 einnehmen.

Der Betätigungstaster 24 und der Freigabetaster 25 stehen über einen Tastengesperre 56 miteinander im Eingriff. Das Tastergesperre 56 blockiert eine Bewegung bzw. ein Eindrücken des Betätigungstasters 24 aus dem gesicherten Zustand 6, in der die Maulfalle 4 blockiert ist. Ein Betätigen bzw. Eindrücken des Freigabetasters 25 wird vom Tastergesperre 56 nicht blockiert.

Das Tastergesperre 56 weist zwei Formschlusselemente 56a, 56b auf, die sich im kraftfreien Zustand des Unterwasserhakens 1, insbesondere unter Wirkung der Verriegelungsfeder 52, aneinander abstützen. Ein Formschlusselement 56b kann beispielsweise einen Vorsprung am Betätigungstaster 24 oder am Freigabetaster 25 ausbilden, der sich in eine Tasche 58 des jeweils anderen Tasters erstreckt. Das andere Formschlusselement 56a kann ebenfalls ein Vorsprung oder ein anderes Element, beispielsweise einen Stift oder Bolzen sein.

Wirkt eine Betätigungskraft 60 auf den Betätigungstaster 24, um diesen zum Grundkörper 8 zu drücken, so ist bevorzugt die am Tastergesperre 56 durch die Betätigungskraft 60 erzeugte Sperrkraft 61 durch die Schwenkachse 28 des Freigabetasters 25 gerichtet. Der Freigabetaster 25 bleibt somit momentenfrei und relativ einfach zu betätigen, selbst wenn große Betätigungskräfte auf den Betätigungstaster 24 wirken. Alternativ kann die Sperrkraft 61 auch so gerichtet sein, dass eine den Betätigungstaster 25 vom Grundkörper 8 weg in den gesicherten Zustand 6 drückende Wirkung, beispielsweise ein Kraft- und/oder Drehmoment, vom Tastergesperre 56 auf den Freigabetaster 25 erzeugt wird. Das Tastergesperre 56 ist im Hinblick auf die Betätigungskraft 60 selbstsperrend und kann nur durch eine auf den Freigabetaster 25 wirkende Entriegelungskraft 62 gelöst werden. Die Entriegelungskraft 62 ist dabei der Betätigungskraft 60 entgegengerichtet. Einander entgegenwirkende Kräfte 60, 62 können beispielsweise bei einem Zangengriff, wie er von einem Greifer erzeugt wird, aufgebracht werden.

Die Verriegelungsfeder 52 weist eine geringere Federhärte auf als die Schließfeder 42, so dass bei einer gleichzeitigen Betätigung von Betätigungstaster 24 und Freigabetaster 25 zunächst nur der Freigabetaster 25 bewegt wird und das Tastergesperre 56 entsperrt.

Die Schließstellung 26 des Betätigungstasters 24, in der die Maulfalle 4 geschlossen bleibt, beinhaltet wenigstens zwei weitere Stellungen, die sich aus der obigen Beschreibung unmittelbar ergeben. Solange sich das Maulgesperre 34 und das Tastergesperre 56 im Eingriff befinden und eine Bewegung der Maulfalle 4 und des Betätigungstasters 24 blockieren, befindet sich der Betätigungstaster 24 in der in Fig. 4 dargestellten Sicherungsstellung 63. Wird der Freigabetaster 25 aus der Sperrstellung 27 (Fig. 1, 4) in die Betätigungsstellung 34 (Fig. 2) bewegt, gelangt das Tastergesperre 56 außer Eingriff und der Betätigungstaster 24 kann in Richtung Offenstellung 33 bewegt werden.

In Fig. 5 befindet sich der Freigabetaster 25 in der Betätigungsstellung 34. Das Tastergesperre 56 ist gelöst. Der Betätigungstaster 24 ist noch nicht aus der Sicherungsstellung 63 bewegt. Das Maulgesperre 35 befindet sich folglich noch im Eingriff. Der Unterwasserhaken 1 befindet sich einem entsperrten Zustand 65, in dem der Betätigungstaster 24 betätigbar und die Maulfalle 4 noch gesichert ist.

Wie in Fig. 5 ferner zu erkennen ist, kann das Tastergesperre 56 ein insbesondere einseitiges Gehemme oder Grenzwertgesperre 66 in Form beispielsweise einer Verrastung aufweisen, indem ein Formschlusselement 56a unter Wirkung des aus der Schließfeder 42 und der Verriegelungsfeder 52 gebildeten Federsystems im gesicherten Zustand 6 des Unterwasserhakens 1 in das andere Formschlusselement 56b einrastet. Dies stellt eine weitere Sicherung dar, denn es muss zunächst das Gehemme 66 überwunden werden, um den Freigabetaster 24 aus der Sperrstellung 27 zu bewegen. Durch das Gehemme 66 ist es zudem möglich, den Widerstand, der zur Bewegung des Freigabetasters 25 aus der Sperrstellung 27 zu überwinden ist, in eng tolerierten, vorbestimmten Grenzen festzulegen.

Im entsperrten Zustand 65 des Unterwasserhakens 1 ist unter Wirkung der Kräfte 60, 62 auch bei einem Zangengriff aufgrund der schwächeren Verriegelungsfeder 52 nur der Freigabetaster 25 aus seiner Ruheposition bewegt. Der Betätigungstaster 24 befindet sich nach wie vor in der Ruheposition bzw. Schließstellung. Somit ist zwar die Bewegung des Betätigungstasters 25 entsperrt, eine Bewegung des Hakenmauls 2 jedoch nach wie vor durch das sich im Eingriff befindliche Maulgesperre 35 blockiert. Eine auf die Maulfalle 4 wirkende Kraft 36 kann folglich nach wie vor nicht versehentlich das Hakenmaul 2 öffnen.

Erst wenn die Betätigungskraft 60 erhöht wird, bewegt sich der Betätigungstaster 24 zum Grundkörper 8 bzw. zur Offenstellung 33 hin und das Maulgesperre 35 wird gelöst. Dies ist in Fig. 6 dargestellt.

Die Maulfalle 4 ist entsichert, aber noch geschlossen. Der Betätigungstaster 24 befindet sich in einer Freigabestellung 67. Die Freigabestellung 67 ist Teil der Schließstellung 26, da die Maulfalle 4 noch geschlossen ist. Der Freigabetaster 25 befindet sich in der Betätigungsstellung 34. Der Unterwasserhaken 1 befindet sich in einem entriegelten Zustand 68.

Der zum Lösen des Maulgesperres 35 notwendige Hub des Betätigungstasters 24 ist höchstens so groß wie ein Spiel des Getriebes 46, so dass das Getriebe 46 erst bewegungsübertragend in Eingriff gelangt und eine Bewegungskopplung zwischen Betätigungstaster 24 und Maulfalle 4 herstellt, wenn das Maulgesperre 35 gelöst ist.

Unter Wirkung der Betätigungskraft 60 wird nunmehr die weitere Bewegung des Betätigungstasters 24 über das Getriebe 46 auf die Maulfalle 4 übertragen, so dass sich diese in Öffnungsrichtung 12 bewegt, bis der in Fig. 7 dargestellte, vollständig geöffnete Zustand 14 des Unterwasserhakens 1 eingenommen ist. Im vollständig geöffneten Zustand 14 sind der Betätigungstaster 24 und der Freigabetaster 25 vollständig eingedrückt und die Maulfalle 4 ist vollständig geöffnet. Der Betätigungstaster 24 befindet sich in der Offenstellung 33. Der Freigabetaster 25 in der Betätigungsstellung 34.

Bevorzugt befindet sich zwischen dem entsperrten und dem geöffneten Zustand das Getriebe 46 spielfrei oder nahezu spielfrei im Eingriff, ist jedenfalls aber mit deutlich weniger Spiel behaftet als im gesicherten Zustand 6. Werden jetzt die Taster 24, 25 wieder losgelassen, so werden unter Wirkung des durch die Schließfeder 42 und die Verriegelungsfeder 52 gebildeten Federsystems die Taster 24, 25 auseinander in ihre Schließpositionen gedrückt. Der Betätigungstaster 24 treibt dabei über das Getriebe 46 die Maulfalle 4 entgegen der Öffnungsrichtung 12 an. Das Maulgesperre 35 und das Tastergesperre 56 verriegeln selbsttätig. Der Unterwasserhaken 1 nimmt automatisch den gesicherten Zustand 6 ein, wenn keine Kräfte auf ihn von außen einwirken.

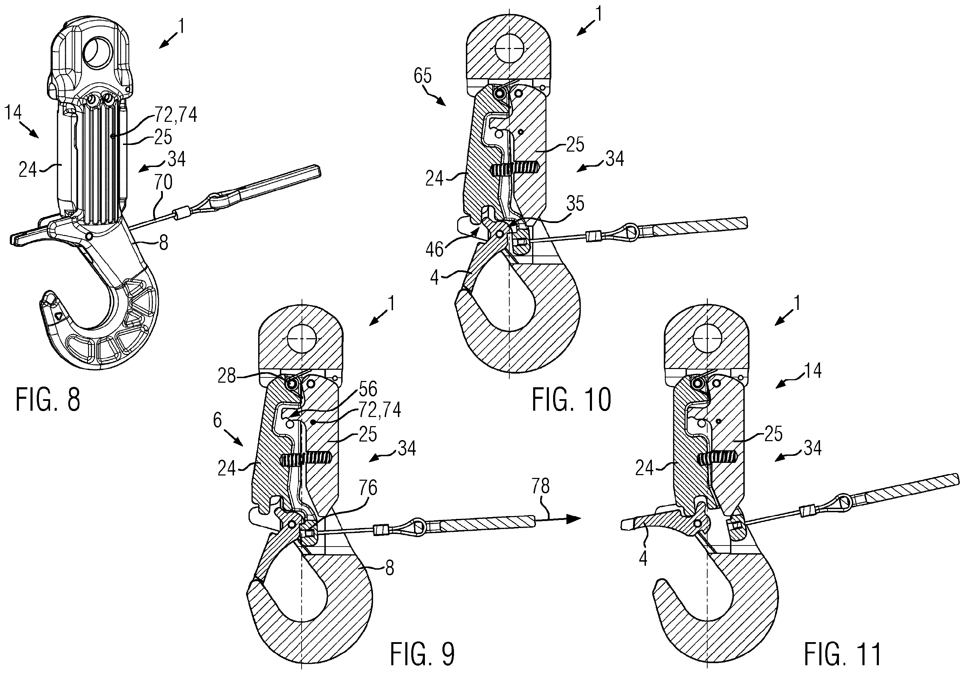

Der in Fig. 8 dargestellte Unterwasserhaken 1 ist im Folgenden näher beschrieben, wobei lediglich auf die Unterschiede zum Unterwasserhaken 1 der Fig. 1 bis 7 eingegangen ist.

Der Unterwasserhaken 1 der Fig. 8 ist ausgebildet, mit einem Zugmittel 70, beispielsweise einem sogenannten Lanyard versehen zu werden. Um den Unterwasserhaken 1 in den geöffneten Zustand 14 zu überführen, muss lediglich am Zugmittel 70 gezogen oder der Betätigungstaster 24 gedrückt werden.

Ein Freigabetaster 24 ist zwar vorhanden, aber in der Betätigungsstellung 34 festgelegt, in der das Tastergesperre freigegeben ist. Der Freigabetaster 25 kann formschlüssig in der eingedrückten Stellung gehalten sein. Hierzu kann beispielsweise ein Befestigungsmittel 72, beispielsweise ein Einschlagstift, durch den Grundkörper 8 und den Betätigungstaster 24 reichen. Auch andere Festlegungen wie Löten, Schweißen, Schrauben oder Nieten sind möglich. Eine Öffnung 74, die das Befestigungsmittel aufnimmt, kann als Spülöffnung dienen, wenn der Unterwasserhaken 1 ohne Zugmittel verwendet wird und der Freigabetaster 25 nicht festgelegt ist. Die Öffnung verläuft senkrecht zur Bewegungsrichtung von Betätigungstaster 24 und/oder Freigabetaster 25. Sie kann von außerhalb des Unterwasserhakens 1 bis zum Freigabetaster 25, durch diesen hindurch und/oder durch den gesamten Unterwasserhaken 1 erstrecken. Die Öffnung 74 kann auch in der Ausführungsform der Fig. 1 oder 4 vorhanden sein.

Wie Fig. 9 zeigt, weist der Betätigungstaster 24 eine Befestigungsstelle 76 für das Zugmittel 70 auf. Dies kann beispielsweise in Form einer Aufnahme ausgebildet sein, in die das Zugmittel 70 eingehängt wird. Bevorzugt befindet sich die Befestigungsstelle 76 an einem von der Schwenkachse 28 des Betätigungstasters 24 abgewandten Ende. Da das Tastergesperre 56 durch den eingedrückt festgelegten Freigabetaster 25 stets gelöst ist, kann durch eine auf das Zugmittel 70 bzw. die Befestigungsstelle 76 wirkende Zugkraft 78 der Betätigungstaster 24 zum Grundkörper 8 hin gezogen werden. Zunächst wird dabei, wie Fig. 10 zeigt, das Maulgesperre 35 gelöst, bevor das Getriebe 46 in Eingriff gelangt und die Bewegung des Betätigungstasters 24 auf die Maulfalle 4 überträgt. Anschließend öffnet sich aufgrund der weiteren Betätigung des Betätigungstasters 24 die Maulfalle 4, bis der in Fig. 11 dargestellte, vollständig geöffnete Zustand 14 erreicht ist.

### Bezugszeichen

- 1: Unterwasserhaken
- 2: Hakenmaul
- 4: Maulfalle
- 6: gesicherter Zustand des Unterwasserhakens
- 8: Grundkörper
- 8a, 8b: Gehäusehälfte
- 10: Fallenachse
- 12: Öffnungsrichtung
- 14: geöffneter Zustand des Unterwasserhakens
- 16: Hakenabschnitt
- 18: Anschlagelement
- 20: Öse
- 22: Betätigungsabschnitt
- 24: Betätigungstaster
- 25: Freigabetaster
- 26: Schließstellung des Betätigungstasters
- 27: Sperrstellung des Freigabetasters
- 28: Schwenkachse eines Tasters
- 29: Außenkontur
- 30: Längsrippe
- 31: Längsrichtung
- 32: Schutzbacke
- 33: Offenstellung des Betätigungstasters
- 34: Betätigungsstellung des Freigabetasters
- 35: Maulgesperre
- 35a, 35b: Formschlusselement
- 36: Öffnungskraft
- 38: Haltekraft
- 41: Fallenanschlag
- 42: Schließfeder
- 44: Maulfeder
- 46: Getriebe
- 48: Verzahnung
- 50: Verzahnung
- 52: Verriegelungsfeder
- 54: Freigabetasteranschlag
- 56: Tastergesperre
- 56a, 56b: Formschlusselement
- 57: Schließstellung
- 58: Tasche
- 60: Betätigungskraft
- 61: Sperrkraft
- 62: Entriegelungskraft
- 63: Sicherungsstellung des Betätigungstasters
- 65: entsperrter Zustand
- 66: Grenzwertgesperre
- 67: Freigabestellung des Betätigungstasters
- 68: entriegelter Zustand
- 70: Zugmittel
- 72: Befestigungsmittel
- 74: Öffnung
- 76: Befestigungsstelle für das Zugmittel
- 78: Zugkraft

## Patentansprüche

1. Unterwasserhaken (1) mit einer Maulfalle (4), die in einem gesicherten Zustand (6) des Unterwasserhakens (1) in einer ein Hakenmaul (2) verschließenden Position freigebbar gesichert ist, mit einem Betätigungstaster (24), der zum Öffnen der Maulfalle (4) bewegungsübertragend mit der Maulfalle (4) verbunden ist und sich im gesicherten Zustand (6) des Unterwasserhakens (1) in einer Schließstellung (26, 63) befindet, und mit einem Freigabetaster (25), der im gesicherten Zustand (6) des Unterwasserhakens (1) eine Bewegung des Betätigungstasters (24) aus der Schließstellung (26, 63) blockiert, wobei sich der Freigabetaster (25) im gesicherten Zustand (6) des Unterwasserhakens (1) im Eingriff mit dem Betätigungstaster (24) befindet, wobei der Unterwasserhaken einen Grundkörper (8) aufweist, in dem der Betätigungstaster (24) beweglich aufgenommen ist, und wobei eine auf den Betätigungstaster (24) wirkende Schließfeder (42) vorhanden ist, die sich zwischen dem Grundkörper (8) und dem Betätigungstaster (24) abstützt und den Betätigungstaster (24) in Richtung des gesicherten Zustandes (6) drückt, **dadurch gekennzeichnet, dass** sich der Freigabetaster (25) über eine Verriegelungsfeder (52) am Betätigungstaster (24) abstützt, wobei die Verriegelungsfeder (52) eine geringere Federhärte aufweist als die Schließfeder (42).

2. Unterwasserhaken (1) nach Anspruch 1, **dadurch gekennzeichnet, dass** die Schließfeder (42) eine um die Schwenkachse des Betätigungstasters (24) gelegte Schenkelfeder ist, deren einer Schenkel am Grundkörper (8) und deren anderer Schenkel sich am Betätigungstaster (24) abstützt.

3. Unterwasserhaken (1) nach Anspruch 1 oder 2, **dadurch gekennzeichnet, dass** die Schließfeder (42) und die Verriegelungsfeder (52) in Reihe geschaltet sind.

4. Unterwasserhaken (1) nach einem der Ansprüche 1 bis 3, **dadurch gekennzeichnet, dass** sich im gesicherten Zustand (6) der Freigabetaster (25) über ein Tastergesperre (56) mit dem Betätigungstaster (24) in Eingriff steht und diesen in der Schließstellung (26, 63) verriegelt.

5. Unterwasserhaken (1) nach Anspruch 4, **dadurch gekennzeichnet, dass** sich das Tastergesperre (56) zwischen dem Betätigungstaster (24) und dem Freigabetaster (25) befindet.

6. Unterwasserhaken (1) nach Anspruch 4 oder 5, **dadurch gekennzeichnet, dass** das Tastergesperre (56) zwei im gesicherten Zustand (6) des Unterwasserhakens (1) miteinander verrastete Formschlusselemente (56a, 56b) aufweist.

7. Unterwasserhaken (1) nach Anspruch 6, **dadurch gekennzeichnet, dass** ein Formschlusselement (56b) am Betätigungstaster (24) in eine Tasche (58) des Freigabetasters (25) oder ein Formschlusselement (56b) am Freigabetaster (25) in eine Tasche des Betätigungstasters (24) ragt.

8. Unterwasserhaken (1) nach einem der Ansprüche 1 bis 7, **dadurch gekennzeichnet, dass** sich der Betätigungstaster (24) über ein Maulgesperre (34) mit der Maulfalle (4) im Eingriff befindet und die Maulfalle (4) in der das Hakenmaul (2) verschließenden Position blockiert.

9. Unterwasserhaken (1) nach Anspruch 8, **dadurch gekennzeichnet, dass** der Betätigungstaster (24) zusätzlich über ein vom Maulgesperre (34) beabstandetes Getriebe (46) mit der Maulfalle (4) im Eingriff steht.

10. Unterwasserhaken (1) nach einem der Ansprüche 1 bis 9, **dadurch gekennzeichnet, dass** in einer Sicherungsstellung (63) der Betätigungstaster (24) die Maulfalle (4) in einer das Hakenmaul (2) verschließenden Stellung blockiert, in einer von der Sicherungsstellung (63) beabstandeten Freigabestellung (67) die Maulfalle (4) geschlossen und mit dem Betätigungstaster (24) beweglich ist, und in einer von der Freigabestellung (67) beabstandeten Offenstellung (33) des Betätigungstasters (24) die Maulfalle (4) geöffnet ist, dass die Freigabestellung (67) zwischen der Sicherungsstellung (63) und der Offenstellung (33) angeordnet ist, und dass sich in der Offenstellung (33) und in der Freigabestellung (67) des Betätigungstasters (24) der Freigabetaster (25) aus einer Sperrstellung (27) bewegt ist, in der sich der Unterwasserhaken (1) im gesicherten Zustand (6) befindet.

11. Unterwasserhaken (1) nach einem der Ansprüche 1 bis 10, **dadurch gekennzeichnet, dass** der Betätigungstaster (24) und der Freigabetaster (25) in einem Grundkörper (8) aufgenommen sind, in dem eine sich von außerhalb des Grundkörpers (8) bis zum Freigabetaster (25) erstreckende Öffnung (74) ausgebildet ist.

12. Unterwasserhaken (1) nach einem der Ansprüche 1 bis 11 **dadurch gekennzeichnet, dass** der Betätigungstaster (24) eine Befestigungsstelle (76) zur Anbringung eines Zugmittels (70) aufweist.

13. Unterwasserhaken (1) nach Anspruch 12, **dadurch gekennzeichnet, dass** der Freigabetaster (25) in einer Betätigungsstellung (34) festgelegt ist, in der der Betätigungstaster (24) aus der Schließstellung (26,63) beweglich ist.

14. Satz umfassend wenigstens zwei Unterwasserhaken (1) mit unterschiedlicher Tragkraft, **dadurch gekennzeichnet, dass** die Unterwasserhaken (1) des Satzes jeweils nach einem der Ansprüche 1 bis 13 ausgestaltet sind und ein Gehäuse aufweisen, in dem die Taster aufgenommen sind, wobei das Gehäuse der Unterwasserhaken (1) des Satzes die gleiche Kubatur aufweist.

## Claims

1. Underwater hook (1) comprising a jaw latch (4) which, in a secured condition (6) of the underwater hook (1), is releasably secured in a position closing a hook jaw (2), an actuation button (24) which, for opening the jaw latch (4), is connected to the jaw latch (4) in a motiontransmitting manner and is in a closed position (26, 63) in the secured condition of the underwater hook (1), and a release button (25) blocking a movement of the actuation button (24) out of the closed position in the secured condition of the underwater hook (1), wherein the release button (25) is in engagement with the actuation button (24) in the secured condition (6) of the underwater hook (1), wherein the underwater hook (1) comprises a main body (8), in which the actuation button (24) is movably received, and wherein a closing spring (42) is provided, which acts on the actuation button (24) and which is supported between the main body (8) and the actuation button (24) and presses the actuation button (24) towards the secured condition (6), **characterized in that** the release button (25) is supported on the actuation button (24) via a locking spring (52), wherein the locking spring (52) has a lower spring hardness than the closing spring (42).

2. Underwater hook (1) according to claim 1, **characterized in that** the closing spring (42) is a leg spring placed around the pivot axle of the actuation button (24), one leg of this leg spring resting on the main body (8) and the other leg resting on the actuation button (24).

3. Underwater hook (1) according to claim 1 or 2, **characterized in that** the closing spring (42) and the locking spring (52) are connected in series.

4. Underwater hook (1) according to any one of claims 1 to 3, **characterized in that** in the secured condition (6), the release button (25) is in engagement with the actuation button (24) via a button locking mechanism (56) and locks the actuation button (24) in the closed position (26, 63).

5. Underwater hook (1) according to claim 4, **characterized in that** the button locking mechanism (56) is located between the actuation button (24) and the release button (25).

6. Underwater hook (1) according to claim 4 or 5, **characterized in that** the button locking mechanism (56) comprises two positive locking elements (56a, 56b) that are locked to each other in the secured condition (6) of the underwater hook (1).

7. Underwater hook (1) according to claim 6, **characterized in that** a positive locking element (56b) on the actuation button (24) projects into a pocket (58) of the release button (25) or that a positive locking element (56b) on the release button (25) projects into a pocket of the actuation button (24).

8. Underwater hook (1) according to one of the claims 1 to 7, **characterized in that** the actuation button (24) is in engagement with the jaw latch (4) via a jaw locking mechanism (34) and blocks the jaw latch (4) in the position closing the hook jaw (2).

9. Underwater hook (1) according to claim 8, **characterized in that,** additionally, the actuation button (24) is in engagement with the jaw latch (4) via a gear unit (46) spaced apart from the jaw locking mechanism (34).

10. Underwater hook (1) according to one of the claims 1 to 9, **characterized in that,** in a safety position (63), the actuation button (24) blocks the jaw latch (4) in a position closing the hook jaw (2), that, in a release position (67) spaced apart from the safety position (63), the jaw latch (4) is closed and movable with the actuation button (24), and that, in an open position (33) of the actuation button (24) spaced apart from the release position (67), the jaw latch (4) is open, that the release position (67) is located between the safety position (63) and the open position (33), and that, in the open position (33) and in the release position (67) of the actuation button (24), the release button (25) is moved away from a locking position (27) in which the underwater hook (1) is in the secured condition (6).

11. Underwater hook (1) according to one of the claims 1 to 10, **characterized in that** the actuation button (24) and the release button (25) are accommodated in a main body (8), in which an opening (74) extending from outside the main body (8) up to the release button (25) is formed.

12. Underwater hook (1) according to one of the claims 1 to 11, **characterized in that** the actuation button (24) is provided with an attachment point (76) for attaching a pulling means (70).

13. Underwater hook (1) according to claim 12, **characterized in that** the release button (25) is fixed in an actuation position (34), in which the actuation button (24) is movable away from the closed position (26, 63).

14. Set comprising at least two underwater hooks (1) having different load-bearing capacities, **characterized in that** the underwater hooks (1) of the set are each configured according to one of the claims 1 to 13 and comprise a housing, in which the buttons are accommodated, the housings of the underwater hooks (1) of the set having the same cubage.

## Revendications

1. Crochet sous-marin (1) doté d'un linguet d'ouverture (4) qui est assuré de manière libérable dans un état sécurisé (6) du crochet sous-marin (1) dans une position de fermeture d'une ouverture du crochet (2), avec un bouton d'actionnement (24) qui est connecté au linguet d'ouverture (4) par transmission de mouvement pour ouvrir le linguet d'ouverture (4) et qui se trouve dans une position fermée (26, 63) dans l'état sécurisé (6) du crochet sous-marin (1), et avec un bouton de libération (25) qui, dans l'état sécurisé (6) du crochet sous-marin (1), bloque un mouvement du bouton d'actionnement (24) hors de la position fermée (26, 63), dans lequel le bouton de libération (25) est en prise avec le bouton d'actionnement (24) dans l'état sécurisé (6) du crochet sous-marin (1), dans lequel le crochet sous-marin comporte un corps principal (8) où le bouton d'actionnement (24) est agencé de manière mobile, et dans lequel se trouve un ressort de fermeture (42) agissant sur le bouton d'actionnement (24), qui est supporté entre le corps principal (8) et le bouton d'actionnement (24) et appuie sur le bouton d'actionnement (24) en direction de l'état sécurisé (6), **caractérisé en ce que** le bouton de libération (25) est supporté sur le bouton d'actionnement (24) par l'intermédiaire d'un ressort de verrouillage (52), dans lequel le ressort de verrouillage (52) présente une rigidité de ressort inférieure à celle du ressort de fermeture (42).

2. Crochet sous-marin (1) selon la revendication 1, **caractérisé en ce que** le ressort de fermeture (42) est un ressort à branches placé autour de l'axe de pivotement du bouton d'actionnement (24), dont une branche s'appuie sur le corps principal (8) et l'autre branche s'appuie sur le bouton d'actionnement (24).

3. Crochet sous-marin (1) selon la revendication 1 ou 2, **caractérisé en ce que** le ressort de fermeture (42) et le ressort de verrouillage (52) sont reliés en série.

4. Crochet sous-marin (1) selon l'une des revendications 1 à 3, **caractérisé en ce qu'**à l'état sécurisé (6), le bouton de libération (25) s'enclenche via un verrouillage de bouton (56) avec le bouton d'actionnement (24) et verrouille celui-ci dans la position fermée (26, 63).

5. Crochet sous-marin (1) selon la revendication 4, **caractérisé en ce que** le verrouillage de bouton (56) se trouve entre le bouton d'actionnement (24) et le bouton de libération (25).

6. Crochet sous-marin (1) selon la revendication 4 ou 5, **caractérisé en ce que** le verrouillage de bouton (56) présente deux éléments de verrouillage par complémentarité de forme (56a, 56b) qui sont verrouillés ensemble dans l'état sécurisé (6) du crochet sous-marin (1).

7. Crochet sous-marin (1) selon la revendication 6, **caractérisé en ce qu'**un élément de verrouillage par complémentarité de forme (56b) présent sur le bouton d'actionnement (24) ressort dans une poche (58) du bouton de libération (25), ou **en ce qu'**un élément de verrouillage par complémentarité de forme (56b) présent sur le bouton de libération (25) ressort dans une poche du bouton d'actionnement (24).

8. Crochet sous-marin (1) selon l'une des revendications 1 à 7, **caractérisé en ce que** le bouton d'actionnement (24) est en prise avec le linguet d'ouverture (4) par l'intermédiaire d'un verrouillage d'ouverture (34) et bloque le linguet d'ouverture (4) dans la position de fermeture de l'ouverture du crochet (2).

9. Crochet sous-marin (1) selon la revendication 8, **caractérisé en ce que** le bouton d'actionnement (24) s'enclenche en outre avec le linguet d'ouverture (4) via un engrenage (46) éloigné du verrouillage d'ouverture (34).

10. Crochet sous-marin (1) selon l'une des revendications 1 à 9, **caractérisé en ce que** dans une position de sécurité (63), le bouton d'actionnement (24) bloque le linguet d'ouverture (4) dans une position de fermeture de l'ouverture du crochet (2), dans une position de libération (67) éloignée de la position de sécurité (63), le linguet d'ouverture (4) est fermé et actionnable avec le bouton d'actionnement (24), et dans une position ouverte (33) éloignée de la position de libération (67) du bouton d'actionnement (24), le linguet d'ouverture (4) est ouvert, **en ce que** la position de libération (67) est agencée entre la position de sécurité (63) et la position ouverte (33), et **en ce qu'**en position ouverte (33) et en position de libération (67) du bouton d'actionnement (24), le bouton de libération (25) est déplacé hors d'une position verrouillée (27) dans laquelle le crochet sous-marin (1) est dans l'état sécurisé (6).

11. Crochet sous-marin (1) selon l'une des revendications 1 à 10, **caractérisé en ce que** le bouton d'actionnement (24) et le bouton de libération (25) sont logés dans un corps principal (8) dans lequel est formée une ouverture (74) qui s'étend depuis l'extérieur du corps principal (8) jusqu'au bouton de libération (25).

12. Crochet sous-marin (1) selon l'une des revendications 1 à 11, **caractérisé en ce que** le bouton d'actionnement (24) comporte un point de fixation (76) pour attacher un moyen de traction (70).

13. Crochet sous-marin (1) selon la revendication 12, **caractérisé en ce que** le bouton de libération (25) est positionné dans une position d'actionnement (34) dans laquelle le bouton d'actionnement (24) peut être déplacé hors de la position fermée (26, 63).

14. Ensemble comprenant au moins deux crochets sous-marins (1) ayant des capacités de charge différentes, **caractérisé en ce que** les crochets sous-marins (1) de l'ensemble sont configurés chacun selon l'une des revendications 1 à 13 et présentent un boîtier où sont logés les boutons, dans lequel le boîtier des crochets sous-marin (1) de l'ensemble présente le même cubage.
